# EUROPEAN PATENT SPECIFICATION

(11) **EP 2 904 126 B1**
(45) Date of publication and mention of the grant of the patent: **06.12.2017**
(21) Application number: 13844294.2
(22) Date of filing: 03.10.2013
(51) Int. Cl.: C22B 3/02, C22B 3/04, C22B 3/20, C22B 11/06, C01G 5/00, G01N 27/416

(54) **METHOD FOR RECOVERY OF SILVER FROM SULPHUR-CONTAINING ZINC LEACH RESIDUES**
VERFAHREN ZUR RÜCKGEWINNUNG VON SILBER AUS SCHWEFELHALTIGEN ZINKLAUGUNGSRÜCKSTÄNDEN
PROCÉDÉ PERMETTANT DE RÉCUPÉRER L'ARGENT À PARTIR DE RÉSIDUS DE LIXIVIATION DU ZINC QUI CONTIENNENT DU SOUFRE

(30) Priority: 03.10.2012 FI 20126036
(43) Date of publication of application: 12.08.2015
(73) Proprietor: Outotec (Finland) Oy, 02230 Espoo (FI)
(72) Inventor: AHTIAINEN, Riina, FI-28610 Pori (FI); MIETTINEN, Ville, FI-53850 Lappeenranta (FI)
(74) Representative: Kolster Oy Ab
(86) International application number: PCT/FI2013/050958
(87) International publication number: WO 2014/053705

(56) References cited:
- WO-A1-84/00563
- GB-A- 1 337 739
- JP-A- 2010 100 938

## Description

The present invention relates to a method of recovering silver from sulphur-containing zinc leach residues, especially direct zinc leach residues.

### BACKGROUND OF THE INVENTION

Zinc concentrates usually contain some silver that ends to the leach residue after direct leaching of zinc. Economical recovery of silver from the leach residue that contains about 70% elemental sulphur is difficult. Conventional cyanide leaching, roasting of the leach residue prior to cyanide leaching, thiosulfate leaching and selective flotation have been proposed, but they are not advisable for either economical or process-technical reasons. Consequently, high-sulphur zinc leach residues have in most cases been discarded for landfill purposes without recovering the silver values therefrom.

Various processes based on chloride leaching have been applied in the prior art for recovering silver and other metal values from zinc leach residues in general.

GB 1337 739 discloses a process of recovering silver and lead contained in residues remaining after zinc concentrates and/or complex concentrates have been roasted to yield a calcined product which has thereafter been treated with an acid to dissolve zinc and to yield said silver and lead containing residues and a zinc containing solution. The zinc and lead containing residues may be obtained from electrolytic production of zinc, for example. The process comprises leaching the residue at ambient temperature with an acidified chloride solution in one or more steps and recovering lead and silver from the leach solution as insoluble salts such as sulphides or by cementation. The chloride solution used for leaching is preferably saturated with chloride and contains copper chloride.

US 4 011 146 discloses a process of recovering silver and lead from sulphide ore concentrates containing lead, silver and zinc sulphides. The sulphides are converted to chlorides in a chlorination step, followed by leaching with aqueous sodium chloride. Lead is recovered from the leach solution by cooling as lead chloride, followed by recovering silver from the lead chloride depleted solution by cementation. The method also comprises recycling the sodium chloride solution depleted of a major part of lead and silver to the chlorination or leaching step and removing a portion of the recycle stream as a bleed stream to control the concentration of zinc and other impurities in the chlorination or leaching solution. It is recited that the leach solution may contain e.g. 260-280 g/l sodium chloride. The leaching step is preferably performed at a temperature of from about 80°C to 100°C.

EP 0 042 702 discloses a process for recovering lead and silver from an ore or a process residue by treatment with acidic chloride brine and precipitating lead oxychloride and silver compounds by adding lime. After further process steps, silver may be finally recovered by cementation or flotation. Examples 1 to 8 show leaching of hot sulphuric acid leach residues obtained from sulphation roasting and leaching of bulk zinc-lead-copper-silver sulphide concentrates. Leaching is performed with a brine solution containing 220-300 g/l NaCl at a pH of 1.5.

US 3 929 597 discloses a method of recovering silver and lead from sulphide ores by leaching with a ferric chloride solution to form a solid residue of silver and lead salts, leaching the solid residue with aqueous sodium chloride to dissolve the salts, cooling the solution to precipitate lead as lead chloride and further recovering silver from the solution by cementation.

GB 2 128 597 discloses a process of recovering non-ferrous metals, such as zinc and copper, from sulphide concentrates. The process comprises leaching the concentrate with an acidic chloride solution containing calcium chloride to solubilize the non-ferrous metals and to precipitate sulphur as calcium sulphate, followed by recovering the metals from the leach liquor by ion exchange in combination with other recovery methods. The document does not discuss the recovery of silver.

However, the processes based on chloride leaching discussed above may not be sufficiently selective for recovering silver from high-sulphur direct zinc leach residues.

### BRIEF DESCRIPTION OF THE INVENTION

An object of the present invention is to provide a method so as to alleviate the above disadvantages relating to selective recovery of silver from high-sulphur zinc leach residues. The objects of the invention are achieved by a method and arrangements which are characterized by what is stated in the independent claims. The preferred embodiments of the invention are disclosed in the dependent claims.

The invention is based on the idea of selecting suitable leaching conditions for dissolving silver from high-sulphur direct zinc leach residues while minimizing the dissolving of components such as sulphur, lead and iron. Appropriate leaching conditions for selective silver leaching are achieved in accordance with the present invention by controlling the process parameters such as chloride concentration, pH and redox potential in the leaching. Silver can then be conveniently recovered from the leach solution by methods such as cementation or sulphide precipitation.

The method of the present invention provides an economical and efficient way of recovering silver from direct zinc leach residues, which have only used for example for landfill purposes without utilizing the silver values contained therein. The use of copper chloride as an additive in the leaching step is not necessary. The process of the present invention has also the advantage that it can be directly combined with metallurgical zinc leaching processes, without intermediate treatment stages such as roasting.

### BRIEF DESCRIPTION OF THE DRAWINGS

In the following the invention will be described in greater detail by means of preferred embodiments with reference to the attached drawings, in which
Figure 1 is a block diagram of an exemplary embodiment of the method of the invention;

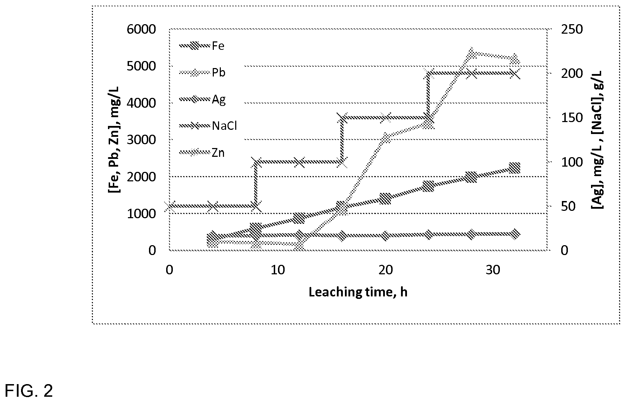

Figure 2 is a graphical presentation showing the effect of the concentration of NaCl on the dissolution of silver and other metals in the leaching;
Figure 3 is a block diagram of a silver leaching system, according to an exemplary embodiment; and
Figure 4 is a flow diagram of a control of a silver leaching process according to an exemplary embodiment.

### DETAILED DESCRIPTION OF THE INVENTION

The invention relates to a method of recovering silver from a direct zinc leach residue. The method of the invention comprises:
(a) a silver leaching step, wherein the direct zinc leach residue is subjected to oxidative chloride leaching to obtain a silver-containing leach solution, and wherein the leaching is performed in the following conditions:
   (i) chloride concentration of the leach solution in the range of 25 to 70 g/l,
   (ii) pH of the leach solution in the range of 1.6 to 2.6, and
   (iii) redox potential of less than 460 mV (Pt vs. Ag/AgCl), and
(b) a silver recovery step, wherein silver is recovered from the silver-containing leach solution.

The direct zinc leach residue used as the starting material in the method of the invention refers to a residue directly obtained from leaching of a zinc concentrate. Consequently, the residue is a direct solid product of zinc leaching, such as sulphuric acid leaching, without any further treatments of the residue for example by roasting.

The silver content of the direct zinc residue is typically in the range of 100 to 500 ppm.

The elemental sulphur content of the direct zinc leach residue is as a rule more than 50 %, typically 60 to 70%.

The direct zinc leach residue further contains iron in an amount of 1 to 10 %. Iron is present in a form that is soluble in the chloride leaching conditions.

Furthermore, the direct zinc leach residue as a rule contains the following metals:
- copper in an amount of 0.1 to 1 %,
- lead in an amount of 5 to 15%,
- zinc in an amount of 1 to 2%.

In the leaching step (a) of the present invention, the chloride concentration is adjusted to a range of 25 to 70 g/l, preferably 30 to 40 g/l (expressed as Cl⁻). In the recited chloride range, silver is dissolved, while lead remains in the solid residue. The adjustment of the chloride concentration to the desired range is typically done by adding NaCl to the leaching solution.

Furthermore, in the leaching step (a) of the present invention, pH of the leach solution is adjusted to a range of 1.6 to 2.6, preferably 1.6 to 2.0. The pH adjustment may be done by adding limestone or sodium hydroxide, or sulphuric acid or hydrochloric acid, for example. By operating in the recited pH range, iron will not dissolve, but precipitates as hematite.

Furthermore, in the leaching step (a) of the present invention, the redox potential is adjusted to a range of less than 460 mV (Pt vs. Ag/AgCl), preferably to a range of less than 460 mV (Pt vs. Ag/AgCl) and higher than 350 mV (Pt vs. Ag/AgCl). In the recited redox potential range, sulphur remains in the solid residue and does not dissolve together with silver.

The redox potential in the leaching step (a) is controlled by feeding a gas selected from oxygen and air to the leach solution. In an embodiment of the invention, the method is performed in the presence of sulphate in the leach solution. The sulphate is normally inherently present in the leaching solution, originating from the sulphur compounds of the high-sulphur zinc leach residue. The amount of the sulphate in the leach solution may be in the range of 5 to 10 g/l, expressed as SO₄²⁻. Sulphate may also be added, for example in the form of sodium sulphate. Sulphate has been found to prevent lead dissolution.

The leaching step (a) is performed at a temperature of 70 to 120°C, preferably 90 to 100°C.

The leaching step (a) provides a silver-containing leach solution and a solid residue, which are subjected to solid/liquid separation.

Silver can be conveniently recovered from the silver-containing leach solution in the following silver recovery step (b) by various methods, such as cementation or sulphide precipitation. Cementation of silver may be performed with zinc powder, for example. Sulphide precipitation of silver may be performed using hydrogen sulphide, for example.

The silver recovery step (b) provides a silver-containing solid product, which is then separated from the silver-depleted solution by solid/liquid separation, such as filtering.

In an embodiment of the invention, the method further comprises, after the silver recovery step (b), a further step (c) of precipitating zinc from the silver-depleted solution to obtain a zinc-containing precipitate and a metal-depleted solution. Copper may be precipitated together with silver. In the precipitation step, zinc and optionally copper may be precipitated as hydroxides by pH adjustment using soda (Na₂CO₃). A suitable pH for the precipitation is 6 to 7. The zinc (and copper) containing precipitate is separated from the metal-depleted solution by solid/liquid separation, for example by filtering.

The zinc (and copper) containing precipitate thus obtained may be introduced to direct leaching of zinc for further recovery of zinc. The metal-depleted solution may be circulated back to the silver leaching step (a).

Consequently, in an embodiment of the invention, the method of the invention may be integrated with a metallurgical zinc leaching process as a preceding step. The method of the invention may thus further comprise, prior to the silver leaching step (a), a step (a0) of leaching zinc from a zinc concentrate. The zinc leaching step (a0) may comprise conventional H₂SO₄ leaching, for example. The zinc leach residue obtained from the zinc leaching step is then directly introduced to the silver leaching step (a) and further to the silver recovery step (b) in accordance with the present invention. The invention makes use of an apparatus for recovering silver from a direct zinc leach residue, which apparatus comprises
a) a silver leaching unit, which is adapted for producing a silver-containing leach solution by oxidative chloride leaching in the following conditions:
   (i) chloride concentration of the leach solution in the range of 25 to 70g/l,
   (ii) pH of the leach solution in the range of 1.6 to 2.6, and
   (iii) redox potential of less than 460 mV (Pt vs. Ag/AgCl), and
(b) a silver recovery unit, which is adapted for recovering silver from the silver-containing leach solution to produce a solid silver- containing product and a silver-depleted solution.
The silver recovery unit is followed by a zinc precipitation unit, which is adapted for precipitation of zinc to produce a zinc-containing precipitate and a metal-depleted solution. The zinc precipitation unit comprises means for circulating the metal-depleted solution to the silver leaching unit. The silver leaching unit is preceded by a zinc leaching unit, which is adapted for producing a zinc- containing solution and a zinc leach residue from a zinc concentrate. The zinc precipitation unit comprises means for circulating the zinc-containing precipitate to the zinc leaching unit for further recovery of zinc.

The apparatus also comprises the necessary solid/liquid separation units for separating solid residues or solid reaction products from liquid reaction media. Consequently, the apparatus also comprises, in connection with or after the silver leaching unit, a first solid/liquid separation unit for separating the silver-containing leach solution from the solid leach residue. Furthermore, the apparatus comprises, in connection with or after the silver recovery unit, a second solid/liquid separation unit for separating the solid silver product from the silver-depleted leach solution. Furthermore, the apparatus of the invention also comprises, in connection with or after the zinc precipitation unit, a third solid/liquid/separation unit for separating the zinc precipitate from the metal-depleted solution.

An aspect of the invention is a method of controlling a leaching process for recovering silver from a direct zinc leach residue, wherein the direct zinc leach residue is subjected to oxidative chloride leaching to obtain a silver-containing leach solution, said method comprising
measuring chloride concentration of the leach solution,
measuring pH of the leach solution,
measuring redox potential during the leaching,
controlling the chloride concentration, the pH and the redox potential of the leach solution based on the measurements such that the leaching is performed in the desired leaching conditions.

In exemplary embodiments, said controlling comprises at least one of following steps:
controlling chloride concentration of the leach solution by feeding sodium chloride,
controlling pH of the leach solution by feeding limestone, sodium hydroxide, sulphuric acid or hydrochloric acid,
controlling redox potential by controlling oxygen or air feed to the leaching process.

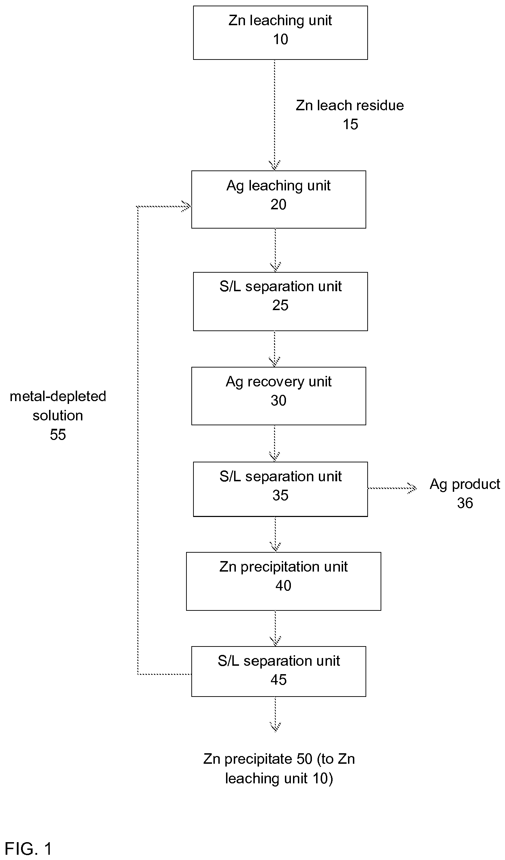

In the following, the invention is illustrated by referring to Figure 1, which is an exemplary embodiment of the invention where silver leaching and silver recovery are combined with preceding zinc leaching and subsequent zinc precipitation. Zinc leach residue 15 from a zinc leaching unit 10 is intro-duded to a silver leaching unit 20, which produces a silver-containing leach solution and a solid residue, which are separated in a first solid/liquid separation unit 25. The silver-containing leach solution is introduced to a silver recovery unit 30, which produces a solid silver product and a silver-depleted solution, which are separated in a second solid/liquid separation unit 35. The solid silver product 36 is withdrawn from the process. The silver-depleted solution is introduced to a zinc precipitation unit 40, which produces a zinc precipitate, which may also contain copper, as well as a metal-depleted solution. The zinc precipitate and the metal-depleted solution are separated in a third solid/liquid separation unit 45. The metal-depleted solution is circulated to the silver leaching unit 20. The zinc precipitate is introduced to the zinc leaching unit 10.

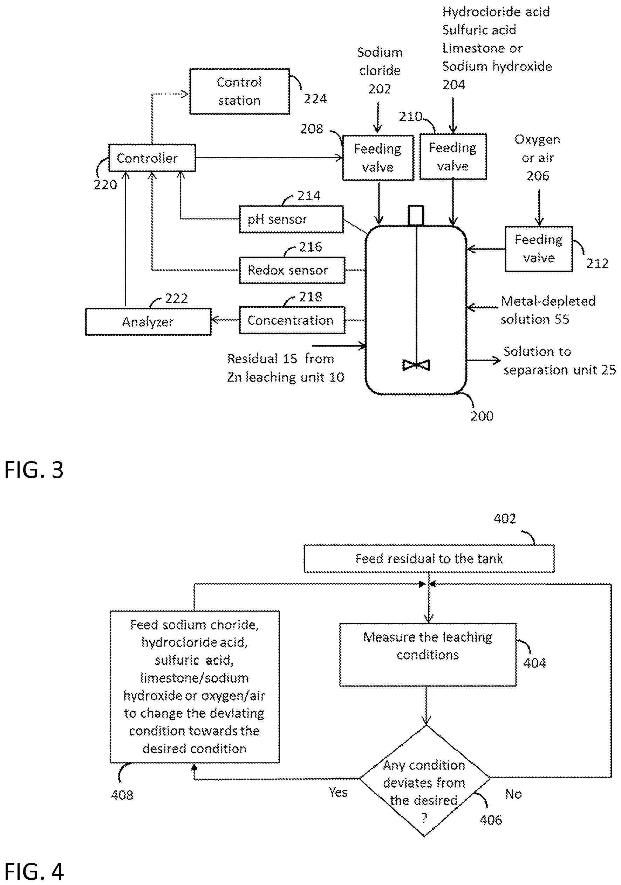

As described above, an aspect of the invention is a careful selection and control of leaching conditions which are suitable for dissolving silver from high-sulphur direct zinc leach residues and, on the other hand, tend to minimize the dissolving of components such as sulphur, lead and iron. Figure 3 is a block diagram of an exemplary silver leaching system wherein such control may be implemented by controlling leaching process parameters, such as chloride concentration, pH and redox potential in the leaching. In the illustrated example, the Ag leaching unit 20 may comprise a stirred reactor tank 200, and necessary inlets and outlets for providing and recovering process streams, e.g. an incoming residual stream 15 from Zn leaching unit 10 (Figure 1) and an outgoing material solution stream to a subsequent separation unit 25. Examples of commercial reactors applicable for reactor tank 200 include OKTOP® reactors manufactured by Outotec. The reactor tank 200 may further comprise inlets for feeding sodium chloride 202, limestone or sodium hydroxide 204, and oxygen or air 206. The feed of the sodium chloride 202 to the reactor tank 200 may be controlled by a feeding valve 208 that may be any type of process control valve. Similarly, the feed of limestone or sodium hydroxide or sulphuric acid or hydrochloric acid 204 and the feed of oxygen/air 206 to the reactor tank 10 may be controlled by a feeding valve 210 or 212, respectively. Alternatively, pumps or other type of process devices may be used instead of valves. Further, a pH measurement unit or sensor 214 may be provided to measure the pH of the solution in the tank, a redox potential measurement unit or sensor 216 may be provided to measure the redox potential in leaching, and a chloride concentration measurement unit or sensor 218 may be provided to measure the chloride concentration in the solution in the tank. A pH measurement signal from the pH sensor 214 and a redox potential measurement signal from the sensor 216 may be inputted to a controller unit 220. The sensor 218 may be implemented as a sampling unit which provides samples of the solution to an analyser 222 via a sampling piping, for example. An example of a suitable analyser is Outotec Courier® 5 SL on-line analyzer. Also the pH of the solution may be measured by the analyser 222 at the same time as the chloride concentration. As a further example, the pH and/or the chloride concentration may be determined from the residual stream 15 prior to the tank. As a still further example, the pH and/or the chloride concentration may be determined from the residual stream 15 or the tank 200 by laboratory tests. Measurement data from the analyser 222 may be transferred to the controller 220.

The controller 220 may be configured to control the feeding valves 208, 210 and 212 based on the inputted measurement signals. The control signal from the controller 220 may be applied also to a control station 224 of the waste water processing system. The control station 224 may be, for example, a process control system or a control room computer. In an exemplary embodiment, the controller 220 may be part of the control station 224, in which case the measurement signals may be supplied to the control station 224 which is configured to control the feeding valves 208, 210 and 212.

An exemplary flow diagram of a control of the Ag leaching process is illustrated in Figure 4. The control process may be an automatic or semiautomatic control. In a semiautomatic control some of the control phases may be done manually e.g. from the control station 224 by an operator. First a residual stream 15 is fed to the reactor tank 200 for Ag leaching (step 402). Leaching conditions, such as chloride concentration, pH and redox potential in leaching, are determined or measured (e.g. by means of sensors 214, 216, 218 and the analyser 222), step 404. The controller 220 may compare the determined leaching conditions with the predetermined leaching conditions suitable for the Ag leaching (step 406). In the case any one of the leaching conditions deviate from the respective predetermined condition, the controller 220 may control the respective one or ones of feeding valves 208, 210 and 212 to feed an appropriate amount of sodium chloride, limestone/sodium hydroxide/sulphuric acid/hydrochloric acid or oxygen/air so as to change the deviating leaching condition towards the predetermined condition (step 408). Steps 404, 406 and 408 may be repeated until the desired leaching conditions are achieved. If the measured leaching conditions do not deviate from the desired leaching conditions, i.e. the process has received a steady state, the control procedure may directly return to the measurement step 404. This type of control and measurement loop may continue maintaining the process in the steady state.

The control techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors. The data storage medium or the memory unit may be implemented within the processor or external to the processor, in which case it can be communicatively coupled to the processor via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

### EXAMPLES

In the following examples, a direct leach residue from sulphuric acid leaching of a zinc concentrate was used as the raw material. The raw material contained 80% sulphur, 10% lead, 5% iron, 2% zinc and 300 ppm silver. The leaching tests were carried out in a 3-litre titanium reactor with mechanical agitation. pH of the leach solution was controlled with sodium hydroxide by pumping sodium hydroxide to the solution.

### EXAMPLE 1

Leaching of silver was performed in the process conditions shown in Table 1. Copper concentration during leaching was increased to show the effect of copper on silver dissolution. Copper chloride was added to the leach solution every eight hours. The oxygen feed was 300 ml/min. The concentration of NaCl was 250 g/l, which corresponds to a chloride concentration of about 152 g/l.

**TABLE 1**

| | |
|---|---|
| Temperature, °C | 95 |
| pH | 1.8 |
| Solid concentration, g/l | 100 |
| Mass of solid, g | 300 |
| Volume of solution, l | 2.7 |
| [NaCl]_{aq,0,} g/l | 250 |
| [Cu]_{aq}, g/l | 0.1-15 |
| -Time 0-8 h | [Cu]_{aq} 0.1 g/l |
| -Time 8-16 h | [Cu]_{aq} 1.0 g/l |
| -Time 16-24 h | [Cu]_{aq} 5.0 g/l |
| -Time 24-32 h | [Cu]_{aq} 15.0 g/l |
| [SO₄²⁻]_{aq,0,} g/l | 10 |
| Oxygen feed, ml/min | 300 |

During the first eight hours, the copper concentration was 0.1 g/l and the yield of silver was 50%, lead 90%, iron 9% and zinc 34%. After 16 hours with a copper concentration of 1.0 g/l, the yield of silver was 52%, lead 83%, iron 16% and zinc 42%. After 24 hours with a copper concentration of 5.0 g/l, the yields were 54% silver, 72% lead, 7% iron and 41 % zinc. At the end of the test with a copper concentration of 15.0 g/l, the yields were 60% silver, 70% lead, 5% iron and 43% zinc.

The results indicate that the copper concentration had no significant effect on the dissolution of silver, lead, iron or zinc. However, it was found that copper concentration does have a significant effect on sulphur dissolution, which should be avoided. Sulphur did not dissolve when the copper concentration was low, i.e. 0.1 g/l and the redox potential of the solution was under 460 mV (Pt vs. Ag/AgCl). Sulphur dissolution started when copper concentration was over 1 g/l and the redox potential of the solution was over 480 mV (Pt vs. Ag/AgCl).

Consequently, the addition of copper is not required in the method of the present invention for selective silver dissolution.

### EXAMPLE 2

Example 2 shows the effect of the concentration sodium chloride (NaCl) on silver dissolution and lead dissolution. The sodium chloride concentration was increased during the dissolution by adding sodium chloride every eight hours. The leaching conditions are presented in Table 2.The sodium chloride concentration in the range of 50 to 200 g/l corresponds to a chloride concentration of about 30 to 121 g/l.

**TABLE 2**

| | |
|---|---|
| Temperature, °C | 95 |
| pH | 1.8 |
| Solid concentration, g/l | 100 |
| Mass of solid, g | 300 |
| Volume of solution, l | 2.7 |
| [Cu]_{aq,0,} g/l | 1 |
| [NaCl]_{aq,} g/l | 50-200 |
| -Time 0-8 h | [NaCl]_{aq} 50 g/l |
| -Time 8-16 h | [NaCl]_{aq} 100 g/l |
| -Time 16-24 h | [NaCl]_{aq} 150 g/l |
| -Time 24-32 h | [NaCl]_{aq} 200 g/l |
| [SO₄²⁻]_{aq,0,} g/l | 10 |
| Oxygen feed, ml/min | 300 |

The dissolution of metals is graphically presented in Figure 1. After eight hours, the yields of metals were 49% silver, 3% lead, 12% iron and 44% zinc. After 16 hours, the yields of metals were 49% silver, 15% lead, 23% iron and 46% zinc. After 24 hours, the yields were 52% silver, 48% lead, 34% iron and 45% zinc. At the end of the test, the yields were 55% silver, 72% lead, 34% iron and 46% zinc. Those results indicate that sodium chloride concentration had no significant effect on the dissolution of silver or zinc, while affecting the dissolution of lead, which is to be avoided. Dissolution of lead increases when sodium chloride concentration is over 50 g/l.

### EXAMPLE 3

Example 3 shows selective dissolution of silver without copper addition. The leaching conditions are presented in Table 3.The sodium chloride concentration 50 g/l corresponds to a chloride concentration of about 30 g/l.

**TABLE 3**

| | |
|---|---|
| Temperature, °C | 95 |
| pH | 1.8 |
| Solid concentration, g/l | 100 |
| Mass of solid, g | 300 |
| Volume of solution, l | 2.7 |
| [NaCl]_{aq}, g/l | 50 |
| [SO₄²⁻]_{aq,0}, g/l | 20 |
| Air feed, ml/min | 250 |

At the end of the test, the yields were 62% silver, 1.7% lead, 36% iron and 33% zinc. The results indicate that leaching of silver is possible with low yield of lead. Copper was not added to the initial solution. Redox potential of solution was under 460 mV (Pt vs. Ag/AgCl).

## Claims

1. A method of recovering silver from a direct zinc leach residue, **characterized in that** the method comprises:
(a) a silver leaching step, wherein the direct zinc leach residue is subjected to oxidative chloride leaching to obtain a silver-containing leach solution, and wherein the leaching is performed in the following conditions:
(i) chloride concentration of the leach solution in the range of 25 to 70 g/l,
(ii) pH of the leach solution in the range of 1.6 to 2.6, and
(iii) redox potential of less than 460 mV (Pt vs. Ag/AgCl), and
(b) a silver recovery step, wherein silver is recovered from the silver-containing leach solution.

2. A method as claimed in claim 1, **characterized in that** the chloride concentration in the leaching step (a) is in the range of 30 to 40g/l.

3. The method as claimed in claim 1 or 2, **characterized in that** pH in the leaching step (a) is in the range of 1.6 to 2.0.

4. The method as claimed in any one of claims 1 to 3, **charac**- **terized** in that the redox potential in the leaching step (a) is less than 460 mV (Pt vs. Ag/AgCl) and higher than 350 mV (Pt vs. Ag/AgCl).

5. The method as claimed in any one of the preceding claims, **characterized in that** the redox potential in the leaching step (a) is controlled by feeding a gas selected from oxygen and air to the leach solution.

6. The method as claimed in any one of the preceding claims, **characterized in that** the method is performed in the presence of sulphate in the leach solution.

7. The method as claimed in claim 6, **characterized in that** the amount of sulphate in the leach solution is in the range of 5 to 10 g/l.

8. The method as claimed in any one of the preceding claims, **characterized in that** the silver recovery step (b) comprises cementation.

9. The method as claimed in any one of claims 1-7, **characterized in that** the silver recovery step (b) comprises sulphide precipitation.

10. The method as claimed in any one of the preceding claims, **characterized in that** the method further comprises, after the silver recovery step (b), a further step (c) of precipitating zinc to obtain a zinc-containing precipitate and a metal-depleted solution.

11. The method as claimed in claim 10, **characterized in that** the method further comprises introducing the zinc-containing precipitate to direct leaching of zinc.

12. The method as claimed in claim 10 or 11, **characterized in that** the method further comprises circulating the metal-depleted solution to the silver leaching step (a).

13. The method as claimed in any one of the preceding claims, **characterized in that** the direct zinc leach residue is a residue obtained from leaching of a zinc concentrate.

14. The method as claimed in claim 13, **characterized in that** the silver content of the direct zinc residue is in the range of 100 to 500 ppm.

15. The method as claimed in claim 13 or 14, **characterized in that** the direct zinc leach residue contains elemental sulphur in an amount of more than 50%, preferably 60 to 70%.

16. The method as claimed in any one of claims 13 to 15, **characterized in that** the direct zinc leach residue further contains iron in an amount of 1 to 10%.

17. The method as claimed in claim 16, **characterized in that** iron is present in a form that is soluble in the chloride leaching conditions.

18. The method as claimed in any one of claims 13 to 17, **characterized in that** the direct zinc leach residue further contains the following metals:
- copper in an amount of 0.1 to 1 %,
- lead in an amount of 5 to 15%,
- zinc in an amount of 1 to 2%.

19. The method as claimed in any one of the preceding claims, **characterized in that** the method further comprises, prior to the silver leaching step (a), a step (a0) of leaching zinc from a zinc concentrate.

20. A method of controlling a leaching process for recovering silver from a direct zinc leach residue, wherein the direct zinc leach residue is subjected to oxidative chloride leaching to obtain a silver-containing leach solution, said method comprising
measuring chloride concentration of the leach solution,
measuring pH of the leach solution,
measuring redox potential during the leaching, controlling the chloride concentration, the pH and the redox potential of the leach solution based on the measurements such that the leaching is performed in the conditions as claimed in any one of claims 1 to 19.

21. The method as claimed in claim 20, wherein said controlling comprises at least one of following steps:
controlling chloride concentration of the leach solution by feeding sodium chloride,
controlling pH of the leach solution by feeding limestone or sodium hydroxide or sulphuric acid or hydrochloric acid, and/or
controlling redox potential by controlling oxygen or air feed to the leaching process.

## Patentansprüche

1. Verfahren zur Rückgewinnung von Silber aus einem direkten Zinklaugenrückstand, **dadurch gekennzeichnet, dass** das Verfahren umfasst:
(a) einen Silberauslaugungsschritt, wobei der direkte Zinklaugenrückstand einer oxidativen Chloridauslaugung unterzogen wird, um eine Silber enthaltende Laugenlösung zu erhalten, und wobei die Auslaugung unter folgenden Bedingungen durchgeführt wird:
(i) Chloridkonzentration der Laugenlösung im Bereich von 25 bis 70 g/l,
(ii) pH-Wert der Laugenlösung im Bereich von 1,6 bis 2,6 und
(iii) Redoxpotential unter 460 mV (Pt vs. Ag/AgCl), und
(b) einen Silberrückgewinnungsschritt, wobei das Silber aus der Silber enthaltenden Laugenlösung rückgewonnen wird.

2. Verfahren nach Anspruch 1, **dadurch gekennzeichnet, dass** die Chloridkonzentration im Auslaugungsschritt (a) im Bereich von 30 bis 40 g/l liegt.

3. Verfahren nach Anspruch 1 oder 2, **dadurch gekennzeichnet, dass** der pH-Wert im Auslaugungsschritt (a) im Bereich von 1,6 bis 2,0 liegt.

4. Verfahren nach einem der Ansprüche 1 bis 3, **dadurch gekennzeichnet, dass** das Redoxpotential im Auslaugungsschritt (a) unter 460 mV (Pt vs. Ag/AgCl) und über 350 mV (Pt vs. Ag/AgCl) liegt.

5. Verfahren nach einem der vorstehenden Ansprüche, **dadurch gekennzeichnet, dass** das Redoxpotential im Auslaugungsschritt (a) durch Zuführen eines Gases, ausgewählt aus Sauerstoff und Luft, zur Laugenlösung gesteuert wird.

6. Verfahren nach einem der vorstehenden Ansprüche, **dadurch gekennzeichnet, dass** das Verfahren in Anwesenheit von Sulfat in der Auslaugungslösung durchgeführt wird.

7. Verfahren nach Anspruch 6, **dadurch gekennzeichnet, dass** die Sulfatmenge in der Auslaugungslösung im Bereich von 5 bis 10g/l liegt.

8. Verfahren nach einem der vorstehenden Ansprüche, **dadurch gekennzeichnet, dass** der Silberrückgewinnungsschritt (b) eine Zementierung umfasst.

9. Verfahren nach einem der Ansprüche 1 bis 7, **dadurch gekennzeichnet, dass** der Silberrückgewinnungsschritt (b) eine Sulfidfällung umfasst.

10. Verfahren nach einem der vorstehenden Ansprüche, **dadurch gekennzeichnet, dass** das Verfahren nach dem Silberrückgewinnungsschritt (b) einen weiteren Schritt (c) der Zinkfällung umfasst, um einen Zink enthaltenden Niederschlag und eine metallarme Lösung zu erhalten.

11. Verfahren nach Anspruch 10, **dadurch gekennzeichnet, dass** das Verfahren weiter das Zuführen des Zink enthaltenden Niederschlags zur direkten Auslaugung von Zink umfasst.

12. Verfahren nach Anspruch 10 oder 11, **dadurch gekennzeichnet, dass** das Verfahren weiter die Rückführung der metallarmen Lösung in den Silberauslagungsschritt (a) umfasst.

13. Verfahren nach einem der vorstehenden Ansprüche, **dadurch gekennzeichnet, dass** der direkte Zinkauslaugungsrückstand ein Rückstand ist, der durch Auslaugung eines Zinkkonzentrats gewonnen wurde.

14. Verfahren nach Anspruch 13, **dadurch gekennzeichnet, dass** der Silbergehalt des direkten Zinkrückstands im Bereich von 100 bis 500 ppm liegt.

15. Verfahren nach Anspruch 13 oder 14, **dadurch gekennzeichnet, dass** der direkte Zinkauslaugungsrückstand elementaren Schwefel in einer Menge von mehr als 50%, vorzugsweise von 60 bis 70 % enthält.

16. Verfahren nach einem der Ansprüche 13 bis 15, **dadurch gekennzeichnet, dass** der direkte Zinkauslaugungsrückstand weiter Eisen in einer Menge von 1 bis 10 % enthält.

17. Verfahren nach Anspruch 16, **dadurch gekennzeichnet, dass** das Eisen in einer Form vorliegt, die unter den Bedingungen der Chloridauslaugung löslich ist.

18. Verfahren nach einem der Ansprüche 13 bis 17, **dadurch gekennzeichnet, dass** der direkte Zinkauslaugungsrückstand weiter folgende Metalle enthält:
- Kupfer in einer Menge von 0,1 bis 1 %,
- Blei in einer Menge von 5 bis 15 %,
- Zink in einer Menge von 1 bis 2%.

19. Verfahren nach einem der vorstehenden Ansprüche, **dadurch gekennzeichnet, dass** das Verfahren vor dem Silberauslaugungsschritt (a) weiter einen Schritt (a0) der Auslaugung von Zink aus einem Zinkkonzentrat umfasst.

20. Verfahren zum Steuern eines Auslaugungsprozesses zur Rückgewinnung von Silber aus einem direkten Zinkauslaugungsrückstand, wobei der direkte Zinkauslaugungsrückstand einer oxidativen Chloridauslaugung unterzogen wird, um eine Silber enthaltende Auslaugungslösung zu erhalten, wobei das Verfahren umfasst
Messen der Chloridkonzentration der Auslaugungslösung,
Messen des pH-Werts der Auslaugungslösung,
Messen des Redoxpotentials während der Auslaugung,
Steuern der Chloridkonzentration, des pH-Werts und des Redoxpotentials der Auslaugungslösung anhand der Messungen, sodass die Auslaugung unter den Bedingungen nach einem der Ansprüche 1 bis 19 durchgeführt wird.

21. Verfahren nach Anspruch 20, wobei das Steuern mindestens einen der folgenden Schritte umfasst:
Steuern der Chloridkonzentration der Auslaugungslösung durch Zuführen von Natriumchlorid,
Steuern des pH-Werts der Auslaugungslösung durch Zuführen von Kalkstein oder Natriumhydroxid oder Schwefelsäure oder Chlorwasserstoffsäure und/oder
Steuern des Redoxpotentials durch Steuerung der Sauerstoff- oder Luftzufuhr in den Auslaugungsprozess.

## Revendications

1. Procédé de récupération d'argent à partir d'un résidu de lixiviation directe du zinc, **caractérisé en ce que** le procédé comprend :
(a) une étape de lixiviation d'argent, dans laquelle le résidu de lixiviation directe du zinc est soumis à une lixiviation oxydative au chlorure pour obtenir une solution de lixiviation contenant de l'argent, et dans laquelle la lixiviation est réalisée dans les conditions suivantes :
(i) concentration en chlorure dans la solution de lixiviation dans la plage de 25 à 70 g/l,
(ii) pH de la solution de lixiviation dans la plage de 1,6 à 2,6, et
(iii) potentiel rédox inférieur à 460 mV (Pt par rapport à Ag/AgCl), et
(b) une étape de récupération d'argent, dans laquelle l'argent est récupéré à partir de la solution de lixiviation contenant de l'argent.

2. Procédé selon la revendication 1, **caractérisé en ce que** la concentration en chlorure dans l'étape (a) de lixiviation est située dans la plage allant de 30 à 40 g/l.

3. Procédé selon la revendication 1 ou 2, **caractérisé en ce que** le pH dans l'étape (a) de lixiviation est situé dans la plage allant de 1,6 à 2,0.

4. Procédé selon l'une quelconque des revendications 1 à 3, **caractérisé en ce que** le potentiel rédox dans l'étape (a) de lixiviation est inférieur à 460 mV (Pt par rapport à Ag/AgCl) et supérieur à 350 mV (Pt par rapport à Ag/AgCl).

5. Procédé selon l'une quelconque des revendications précédentes, **caractérisé en ce que** le potentiel rédox dans l'étape (a) de lixiviation est contrôlé en introduisant un gaz sélectionné parmi l'oxygène et l'air dans la solution de lixiviation.

6. Procédé selon l'une quelconque des revendications précédentes, **caractérisé en ce que** le procédé est réalisé en présence de sulfate dans la solution de lixiviation.

7. Procédé selon la revendication 6, **caractérisé en ce que** la quantité de sulfate dans la solution de lixiviation est située dans la plage allant de 5 à 10 g/l.

8. Procédé selon l'une quelconque des revendications précédentes, **caractérisé en ce que** l'étape (b) de récupération d'argent comprend une cémentation.

9. Procédé selon l'une quelconque des revendications 1 - 7, **caractérisé en ce que** l'étape (b) de récupération d'argent comprend une précipitation au sulfure.

10. Procédé selon l'une quelconque des revendications précédentes, **caractérisé en ce que** le procédé comprend en outre, après l'étape (b) de récupération d'argent, une étape (c) supplémentaire de précipitation de zinc pour obtenir un précipité contenant du zinc et une solution appauvrie en métal.

11. Procédé selon la revendication 10, **caractérisé en ce que** le procédé comprend en outre l'introduction du précipité contenant du zinc dans la lixiviation directe du zinc.

12. Procédé selon la revendication 10 ou 11, **caractérisé en ce que** le procédé comprend en outre la mise en circulation de la solution appauvrie en métal vers l'étape (a) de lixiviation d'argent.

13. Procédé selon l'une quelconque des revendications précédentes, **caractérisé en ce que** le résidu de lixiviation directe du zinc est un résidu obtenu à partir de la lixiviation d'un concentré de zinc.

14. Procédé selon la revendication 13, **caractérisé en ce que** la teneur en argent du résidu direct de zinc est située dans la plage allant de 100 à 500 ppm.

15. Procédé selon la revendication 13 ou 14, **caractérisé en ce que** le résidu de lixiviation directe du zinc contient du soufre élémentaire en une quantité de plus de 50 %, de préférence de 60 à 70 %.

16. Procédé selon l'une quelconque des revendications 13 à 15, **caractérisé en ce que** le résidu de lixiviation directe du zinc contient en outre du fer en une quantité de 1 à 10%.

17. Procédé selon la revendication 16, **caractérisé en ce que** du fer est présent sous une forme qui est soluble dans les conditions de lixiviation au chlorure.

18. Procédé selon l'une quelconque des revendications 13 à 17, **caractérisé en ce que** le résidu de lixiviation directe du zinc contient en outre les métaux suivants :
- du cuivre en une quantité de 0,1 à 1 %,
- du plomb en une quantité de 5 à 15 %,
- du zinc en une quantité de 1 à 2 %.

19. Procédé selon l'une quelconque des revendications précédentes, **caractérisé en ce que** le procédé comprend en outre, avant l'étape (a) de lixiviation d'argent, une étape (a0) de lixiviation de zinc à partir d'un concentré de zinc.

20. Procédé de contrôle d'un processus de lixiviation pour récupérer de l'argent à partir d'un résidu de lixiviation directe du zinc, dans lequel le résidu de lixiviation directe du zinc est soumis à une lixiviation oxydative au chlorure pour obtenir une solution de lixiviation contenant de l'argent, ledit procédé comprenant
la mesure de la concentration en chlorure de la solution de lixiviation,
la mesure du pH de la solution de lixiviation,
la mesure du potentiel rédox pendant la lixiviation,
le contrôle de la concentration en chlorure, du pH et du potentiel rédox de la solution de lixiviation sur la base des mesures de façon que la lixiviation soit réalisée dans les conditions selon l'une quelconque des revendications 1 à 19.

21. Procédé selon la revendication 20, dans lequel ledit contrôle comprend au moins une des étapes suivantes :
le contrôle de la concentration en chlorure de la solution de lixiviation par l'introduction de chlorure de sodium,
le contrôle du pH de la solution de lixiviation par l'introduction de calcaire ou d'hydroxyde de sodium ou d'acide sulfurique ou d'acide chlorhydrique, et/ou
le contrôle du potentiel rédox par le contrôle de l'introduction d'oxygène ou d'air dans le processus de lixiviation.
